# EUROPÄISCHE PATENTSCHRIFT

(11) **EP 1 669 277 B1**
(45) Veröffentlichungstag und Bekanntmachung des Hinweises auf die Patenterteilung: **20.02.2008**
(21) Anmeldenummer: 05005971.6
(22) Anmeldetag: 18.03.2005
(51) Int. Cl.: B62D 25/06, B62D 29/04, B62D 65/06

(54) **Karosserieanbauteil, Zwischenprodukt und Verfahren zum Herstellen eines solchen Karosserieanbauteils**
Accessory vehicle body part, intermediate product and manufacturing process for such a part
Accessoire de carrosserie véhicule, produit intermédiaire, et son procédé de fabrication

(43) Veröffentlichungstag der Anmeldung: 14.06.2006
(73) Patentinhaber: ArvinMeritor GmbH, 63128 Dietzenbach (DE)
(72) Erfinder: Ludwig, Matthias, 38159 Vechelde (DE); Niebuhr, Frank, 38518 Wilsche (DE); Batke, Harald, 38539 Müden/Aller (DE); Langhoff, Hans, 38518 Gifhorn (DE); Niesner, Tobias, 38518 Gifhorn (DE); Hardel, Sven, 29386 Wettendorf (DE); Beck, Herbert, 38302 Wolfenbüttel (DE)
(74) Vertreter: Kitzhofer, Thomas

(56) Entgegenhaltungen:
- EP-A- 0 995 667
- DE-A1- 3 725 807
- US-A1- 2005 001 347
- US-A1- 2005 046 240

## Beschreibung

Die Erfindung betrifft ein Karosserieanbauteil für ein Fahrzeug, insbesondere ein Dachmodul, nach dem Oberbegriff des Anspruchs 1. Erfindung ein Verfahren zum Herstellen eines solchen Karosserieanbauteils.

Geschäumte Karosserieanbauteile, insbesondere Dachmodule, mit einem glasfaserverstärkten PU-Material sind bereits bekannt, wobei die Glasfasern beispielsweise im sogenannten LFI- (Long Fiber Injection) Verfahren in den Kunststoff eingeschossen werden. Solche vormontierten Dachmodule werden auf eine von einem Karosserierahmen umgebene Dachöffnung von oben aufgesetzt und an dem Karosserierahmen befestigt.

Dachmodule, die Glasdeckel oder, allgemeiner, großflächige Glaspaneele besitzen, haben an den Übergängen zwischen geschäumter Schicht und dem Glaspaneel Dichtungen, um die Verbindungsstellen zwischen der als separates Teil ausgebildeten hinterschäumten Folie und dem Glaspaneel abzudichten. Das Glaspaneel und das durch die hinterschäumte Folie gebildete Teil stoßen im eingebauten Zustand stirnseitig unter Zwischenschaltung der Dichtung aneinander an. Die Öffnung, die beim Einbau eines Glaspaneels in der tragenden Schicht nötig ist, führt zu einer großen Abfallmenge an teurem Folienmaterial.

Ferner werden Glaspaneele bei Panoramadächern an zusätzlichen Abstandsbauteilen, sogenannten Spacern, angebracht, damit diese nicht zu den angrenzenden, hinterschäumten Teilen höhenversetzt sind.

Die US 2005/0046240 A1 beschreibt ein gattungsbildendes Dachmodul mit einer geschäumten Schicht, die als Rahmen ausgebildet ist und eine Aussparung umgibt. Der Rahmen hat eine Auflagefläche, an der beispielsweise transparente Paneele angebracht werden können.

Aus der EP 0 995 667 A1 ist ein Dachmodul bekannt, das aus einer tiefgezogenen Außenhaut aus Metallblech oder Kunststoff und einer geschäumten Innenschicht besteht. Das Dachmodul wird in einer Schäumform hergestellt, die ein Oberteil und ein Unterteil aufweist.

Die Aufgabe der Erfindung besteht darin, ein Karosserieanbauteil für ein Fahrzeug, insbesondere ein Dachmodul, einfach und kostengünstig herzustellen.

Dies wird bei einem Karosserieanbauteil der eingangs genannten Art mit den Merkmalen des Anspruchs 1 erreicht. Auf die Trägerschicht, die sich unter den zweiten Außenhautabschnitt erstreckt, wird der zweite Außenhautabschnitt unmittelbar befestigt, z.B. aufgeklebt. Die Lage der Trägerschicht ist dabei so gewählt, daß keine zusätzlichen Spacer notwendig sind und trotzdem eine durchgehende Dachfläche ohne Absatz entsteht, wobei der zweite Außenhautabschnitt nicht über die Umhüllende des Karosserieanbauteils vorsteht. Damit ergibt sich insgesamt eine hohe Stabilität und eine erleichterte Abdichtung zwischen den zwei Abschnitten der Außenhaut.

Die beiden plattenförmig ausgebildeten, großflächigen Außenhautabschnitte sind vorzugsweise unverschiebbar, das bedeutet nicht lösbar am Trägerteil befestigt.

Da sich die Folie auch unter den ihr zugewandten Rand des zweiten Außenhautabschnitts erstrecken kann, wird die Abdichtung zwischen dem ersten und zweiten Außenhautabschnitt erleichtert. Dies ermöglicht ein kostengünstiges und einfach herstellbares Karosserieanbauteil.

Bevorzugt besitzt die Trägerschicht im Bereich des zweiten Außenhautabschnitts eine großflächige Öffnung und verläuft als Rahmen um die Öffnung herum. Dies reduziert das Gewicht der Trägerschicht. Wenn der zweite Außenhautabschnitt beispielsweise aus einem transparenten oder transluzenten Material besteht, kann so ein Panoramadach hergestellt werden.

Der Rahmen kann einstückig und geschlossen um die Öffnung herum verlaufen. Dies gewährleistet eine hohe Stabilität.

Bevorzugt besteht der zweite Außenhautabschnitt aus Glas oder durchsichtigem Kunststoff. Auch als Solarpaneel kann der zweite Außenhautabschnitt ausgebildet sein.

Der zweite Außenhautabschnitt kann zum Beispiel auf die Trägerschicht aufgeklebt sein, das heißt, der zweite Außenhautabschnitt ist unmittelbar und unverschiebbar auf der Trägerschicht befestigt.

Vorzugsweise ist ein dritter, auf der Trägerschicht sitzender Außenhautabschnitt vorgesehen, der durch ein gegenüber dem ersten und zweiten Außenhautabschnitt separates Teil gebildet ist. Somit sind unterschiedliche Gestaltungsmöglichkeiten des Karosserieanbauteils möglich, die den Kundenwünschen angepaßt werden können.

Der dritte Außenhautabschnitt ist z.B. eine Folie oder ein Teil aus einem transparenten oder transluzenten Material. So kann ein Dachmodul einen oder mehrere transparente oder transluzente Bereiche aufweisen. Auch hier kann alternativ ein Solarpaneel eingebaut werden.

Bevorzugt ist ein Abschnitt der Folie, der sich unter den der Folie zugewandten Rand des zweiten Außenhautabschnitts erstreckt, als Wasserrinne ausgebildet. So muß keine zusätzliche Wasserrinne angebracht werden, wodurch eine Kostenersparnis möglich ist.

Ein Zwischenprodukt zum Herstellen des erfindungsgemäßen Karosserieanbauteils weist die durchgehende, einstückige Trägerschicht und den ersten Außenhautabschnitt aus einer Folie auf, wobei die Trägerschicht im Bereich des nachträglich angebrachten, zweiten Außenhautabschnitts eine freiliegende, großflächige Auflagefläche für den zweiten Außenhautabschnitt bildet, so daß sich insgesamt ein stabiles Gesamtteil erzeugen läßt, das einteilig durch einen Schäumvorgang hergestellt ist.

Bevorzugt ist die Auflagefläche höhenversetzt zum ersten Außenhautabschnitt angeordnet. Somit gehen der erste und der zweite Außenhautabschnitt nach dem Anbringen des zweiten Außenhautabschnitts auf die Auflagefläche ohne Höhenversatz ineinander über, weshalb der zweite Außenhautabschnitt nicht über die Umhüllende des Karosserieanbauteils vorsteht.

Das erfindungsgemäße Verfahren zum Herstellen eines Karosserieanbauteils ist durch folgende Schritte gekennzeichnet:
- Bereitstellen eines Schäumwerkzeuges mit einem Werkzeugunterteil, das mehrere Abschnitte aufweist,
- Einlegen einer Folie in das Werkzeugunterteil, wobei die Folie an einem ersten Abschnitt des Werkzeugunterteils anliegt,
- Aufbringen eines aushärtbaren Schäummaterials auf die Folie und einen zweiten Abschnitt des Werkzeugunterteils, an dem die Folie nicht anliegt, zur Bildung einer durchgehenden Trägerschicht.

Vorzugsweise besteht das Werkzeugunterteil aus mehreren Werkzeugteilen, wodurch eine veränderbare Positionierung der einzelnen Werkzeugteile ermöglicht wird.

Wenigstens ein Werkzeugteil des Werkzeugunterteils ist bevorzugt relativ zu einem anderen Werkzeugteil des Werkzeugunterteils beweglich.

Ein Entlüftungsschlitz kann zwischen Folienrand und einem der Werkzeugteile vorgesehen sein, durch den beim Schäumvorgang entstandene Gase entweichen können. Der Entlüftungsschlitz führt zu einer guten Oberflächenqualität.

Die Folie wird von einem ersten Werkzeugteil des Werkzeugunterteils bevorzugt gegen ein zweites Werkzeugteil gedrückt, um die Folie weitgehend gegenüber einem der Werkzeugteile abzudichten. Da die Folie abgedichtet ist, kann eine werkzeugseitige Teilabdichtung entfallen.

Vorzugsweise wird ein zweiter Außenhautabschnitt auf die Trägerschicht geklebt. Somit kann z.B. einfach ein Panoramadach oder ein Dachmodul mit einer Dachöffnung hergestellt werden.

Weitere Merkmale und Vorteile der Erfindung ergeben sich aus der nachfolgenden Beschreibung und den Zeichnungen. Die Erfindung wird nachfolgend anhand der bevorzugten Ausführungsform beschrieben. In den Zeichnungen zeigen:
- Figur 1 eine perspektivische Ansicht eines Fahrzeugs mit einem erfindungsgemäßen Karosserieanbauteil, in Form eines Panoramadachmoduls,
- Figur 2 eine Ansicht eines Zwischenprodukts zum Herstellen des Karosserieanbauteils nach Fig. 1,
- Figur 3 eine Schnittansicht des Zwischenprodukts mit angebrachten Außenhautabschnitten entlang der Linie III-III in Figur 2,
- Figur 4 eine vergrößerte Schnittansicht des Zwischenprodukts im Schäumwerkzeug bei bereits leicht angehobenem Werkzeugoberteil des Schäumwerkzeugs,
- Figur 5 einen vergrößerten Ausschnitt des mit X bezeichneten Bereichs in Figur 4 mit dem Schäumwerkzeug in einer ersten Ausführungsform, und
- Figur 6 einen vergrößerten Ausschnitt gemäß Figur 5 des Schäumwerkzeugs in einer zweiten Ausführungsform.

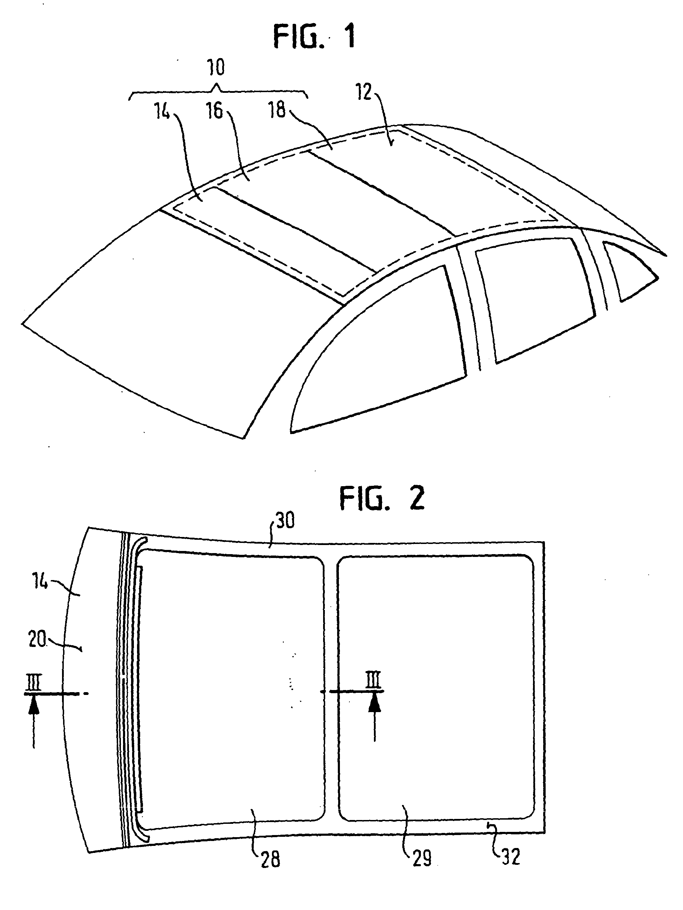

In Figur 1 ist ein Karosserieanbauteil in Form eines Dachmoduls 10 gezeigt. Das Karosserieanbauteil könnte jedoch auch als Kotflügel, Tür oder Klappe (Motorhaube, Kofferraumdeckel) eines Fahrzeugs ausgebildet sein.

Das Dachmodul 10 weist eine großflächige Außenhaut 12 auf, die mehrere Außenhautabschnitte 14, 16, 18 hat. Die drei plattenförmigen, großflächigen Außenhautabschnitte 14, 16, 18 sind aus unterschiedlichen Materialien gebildet.

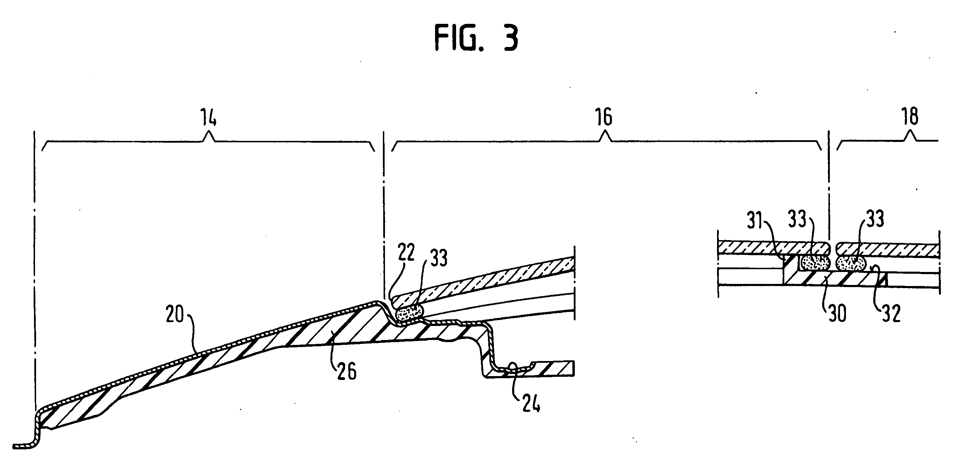

Der erste Außenhautabschnitt 14, der im eingebauten Zustand an die Frontscheibe angrenzt, ist aus einer tiefgezogenen Folie 20, die aus Kunststoff oder Aluminium besteht und vorzugsweise durchgefärbt ist (Figur 3). Die Folie 20, die die Außenhaut des ersten Außenhautabschnitts 14 bildet, erstreckt sich unter den ihr zugewandten Rand 22 des angrenzenden zweiten Außenhautabschnitts 16 (Figur 3) und ist dabei als Wasserrinne 24 ausgeformt.

Der zweite Außenhautabschnitt 16, der angrenzend an den ersten Außenhautabschnitt 14 angeordnet ist, besteht aus einem transparenten Material, wie Glas, oder transluzentem Material.

Der dritte Außenhautabschnitt 18 ist ebenfalls als gegenüber dem ersten und zweiten Außenhautabschnitt 14, 16 separates Teil ausgebildet und ist in Figur 3 als Glaspaneel gezeigt. Es ergibt sich somit ein stabiles Panoramadach, das große Glasflächen aufweist und als fertiges Dachmodul am Dachrahmen befestigt wird. Der dritte Außenhautabschnitt 16 könnte auch - wie der erste Außenhautabschnitt 14 - aus der Folie 20 oder einem Solarpaneel bestehen (nicht gezeigt).

An der Rückseite der Folie 20 schließt eine Trägerschicht 26 an, die durch Hinterschäumen der Folie 20 mittels des LFI-Verfahrens hergestellt ist. Die Trägerschicht 26 erstreckt sich einstückig bis unter den zweiten und dritten Außenhautabschnitt 16, 18 und besitzt im Bereich des zweiten und dritten Außenhautabschnitts 16 jeweils eine großflächige Öffnung 28, 29, wobei die Trägerschicht 26 geschlossen als einstückiger Rahmen 30 um die jeweilige Öffnung 28, 29 herumverläuft (Figur 2). Die Trägerschicht 26 bildet eine Auflagefläche 32 für den zweiten und dritten Außenhautabschnitt 16, 18, die nach oben freiliegend und großflächig ist.

Die Auflagefläche 32 für den zweiten und dritten Außenhautabschnitt 16, 18 ist so ausgeführt, daß nach dem Anbringen der Außenhautabschnitte 16, 18 diese nicht über die Umhüllende des ersten Außenhautabschnitts 14 vorstehen. So kann eine absatzlose, optisch ansprechende Oberfläche des Dachmoduls 10 erreicht werden. Alternativ können auch Vorsprünge (Spacer) einstückig an der Trägerschicht 26 angeformt werden, deren Oberseite die Auflagefläche bildet. An den Vorsprüngen werden die Außenhautabschnitte 16, 18 nicht angeklebt, sie liegen vielmehr nur an, so daß die Vorsprünge für die exakte Höhenausrichtung verantwortlich sind.

Der zweite und dritte Außenhautabschnitt 16, 18 sind nachträglich unmittelbar auf der Trägerschicht 26, genauer gesagt auf der Auflagefläche 32, beispielsweise durch Kleben befestigt. Die Kleberraupe trägt das Bezugszeichen 33. Die beiden Außenhautabschnitte 16, 18 sind also unverschiebbar, das heißt nicht lösbar an der Trägerschicht 26, befestigt. Der zweite Außenhautabschnitt 16 ist dabei an seinem vorderen Rand 22 auf der Folie 20 angebracht, die wiederum auf der Trägerschicht 26 angebracht ist.

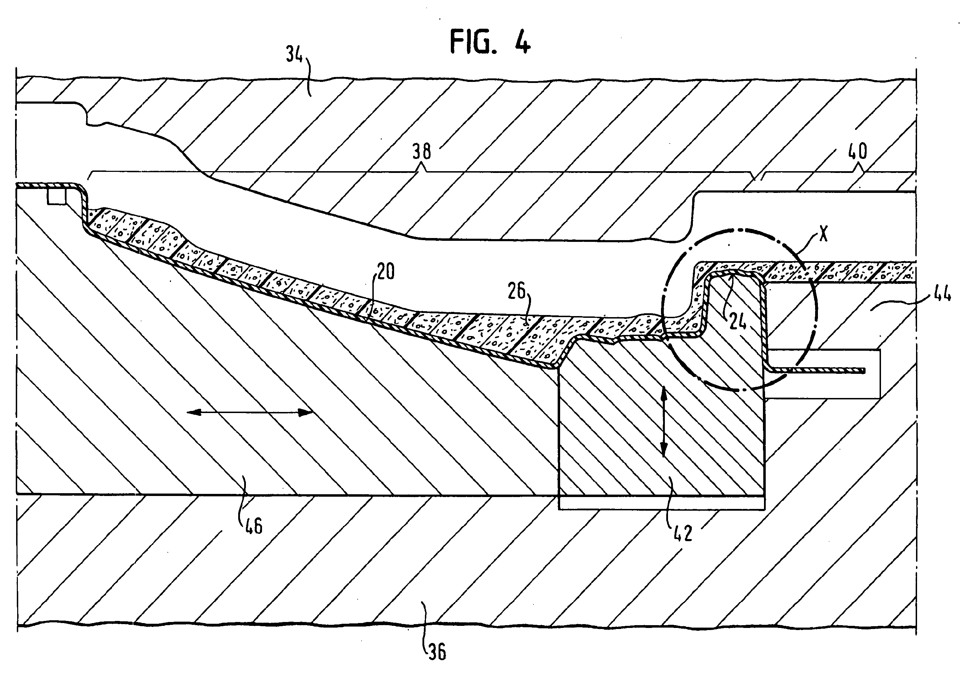

In Figur 4 ist ein Schäumwerkzeug bereits leicht angehoben mit der geschäumten Trägerschicht 26 dargestellt, mit dessen Hilfe Karosserieanbauteile wie das eingangs genannte Panoramadachmodul 10, Kotflügel, Türen oder Klappen (Motorhaube, Kofferraumdeckel) des Fahrzeugs hergestellt werden.

Das Schäumwerkzeug umfaßt ein Werkzeugoberteil 34 und ein Werkzeugunterteil 36, wobei das Werkzeugunterteil 36 aus mehreren Abschnitten 38, 40 besteht. Die Folie 20 liegt dabei an dem ersten Abschnitt 38 an, nicht jedoch an dem zweiten Abschnitt 40.

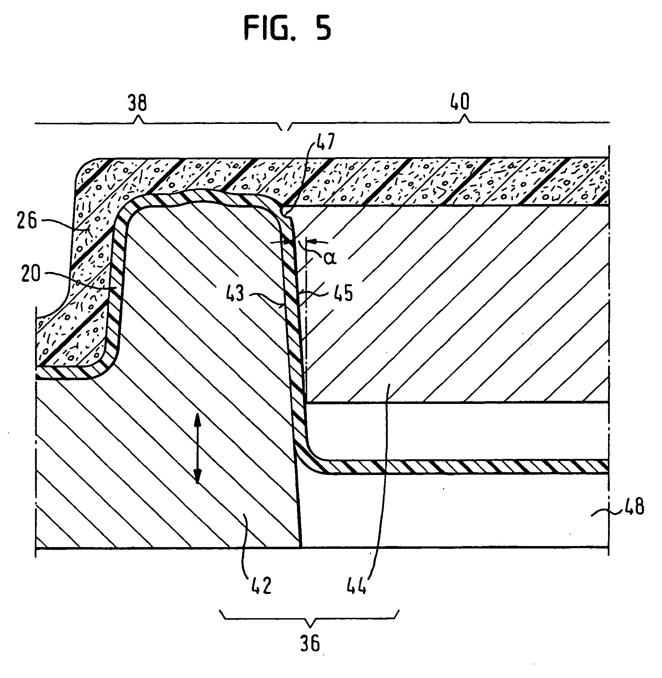

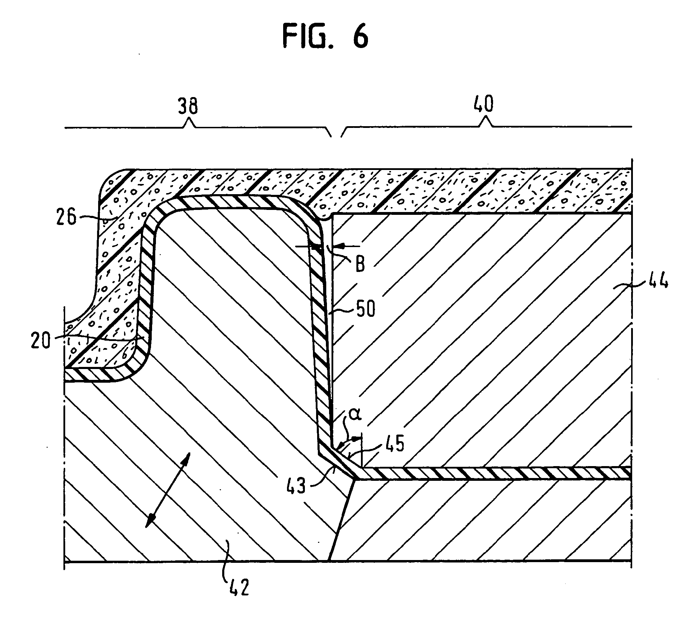

Das Werkzeugunterteil 36 hat mehrere Werkzeugteile 42, 44, 46, wobei die Werkzeugteile 42 und 46 vertikal bzw. horizontal (Figuren 4 und 5) und schräg (Figur 6) relativ zum Werkzeugteil 44 beweglich sind.

Die Werkzeugteile 42, 44 weisen zwei zueinander gerichtete Seiten 43, 45 auf, zwischen denen die Folie 20 verläuft. Die beiden Seiten 43, 45 sind jeweils unter einem Winkel α zur Vertikalen geneigt (Figur 5). An dem oberen Eckabschnitt des Werkzeugteils 44 ist eine abstehende Dichtnase 47 angeformt, die zwischen Werkzeugteil 44 und Folie 20 abdichtet.

Bei dem Verfahren zum Herstellen eines geschäumten Karosserieanbauteils wird in den ersten Abschnitt 38 des Werkzeugunterteils 36 die tiefgezogene Folie 20 bei abgesenktem Werkzeugteil 42 eingelegt, die in Richtung einer seitlichen Aussparung 48 im Werkzeugteil 42 verläuft und sich mit ihrem Rand in diese erstreckt, um Toleranzen beim Tiefziehen der Folie 20 insbesondere im Endbereich der Folie 20 auszugleichen.

Wenn das Werkzeugteil 42 nach oben gefahren wird, wird die Folie 20 zwischen den Seiten 43, 45, insbesondere im Bereich der Dichtnase 47 geklemmt, so daß kein Schäummaterial zwischen die Seiten 43, 45 gelangen kann und eine werkzeugseitige Dichtung entfallen kann.

Schließlich wird das Werkzeugteil 46 horizontal nach rechts bis zum Anschlag an das Werkzeugteil 42 verfahren.

Nach dem Klemmen der tiefgezogenen Folie 20 wird flüssiges PU-Material rückseitig auf die Folie 20 bzw. auf den zweiten Abschnitt 40 des Werkzeugunterteils 36 aufgebracht, wobei Glasfasern miteingeschossen werden (LFI-Verfahren).

Werkzeugober- und -unterteil 34, 36 werden zusammengefahren. Das PU-Material schäumt aus und füllt den sich zwischen Werkzeugober- und -unterteil 34, 36 bildenden Hohlraum aus, der nach dem Schäumen die durchgehende Trägerschicht 26 bildet. Nach dem Ausschäumen werden das Werkzeugteil 46 nach links und das Werkzeugteil 42 nach unten gefahren, so daß das erzeugte Zwischenprodukt aus dem Werkzeug entnommen werden kann.

Die Folie 20 wird seitlich der Regenrinne 24 beschnitten, so daß der beschnittene Rand nicht gegenüber der angrenzenden Trägerschicht 26 vorsteht.

Nach dem Herstellen des Zwischenprodukts (Figur 2) werden der zweite und dritte Außenhautabschnitt 16, 18 auf die Trägerschicht 26 aufgeklebt.

In Figur 6 ist eine weitere Ausführungsform des Werkzeugs zur Herstellung des Panoramadachmoduls 10 gezeigt, die im wesentlichen der oben beschriebenen Ausführungsform entspricht, auf die verwiesen wird.

Das Werkzeugteil 42 des Werkzeugunterteils 36 ist schräg zum Werkzeugteil 44 verstellbar, so daß das Werkzeugteil 42 mit ihrer abgeschrägten Seite 43 die Folie 20 gegen die schräge Seite 45 drückt und kein Schäummaterial zwischen die Seiten 43, 45 gelangen kann, wodurch eine werkzeugseitige Dichtung entfällt. Die beiden Seiten 43, 45 weisen dieselbe Neigung auf und sind im Bereich einer unteren Kante des Werkzeugteils 44 angeordnet.

Das Werkzeugteil 44 weist einen vertikalen Entlüftungsschlitz 50 auf, der ein Entweichen der Gase ermöglicht, die beim Schäumvorgang entstehen. Die Breite B des Entlüftungsschlitzes 50 nimmt mit zunehmender Entfernung zur Trägerschicht 26 ab und erstreckt sich bis in etwa zum unteren Drittel des Werkzeugteils 44. Die Spaltbreite B ist so gering, daß kein Schaum in den Spalt eindringt, d.h. der Spalt ist übertrieben groß dargestellt.

Das Schäumverfahren und das Aufkleben der Außenhautabschnitte 16, 18 entspricht dem der ersten Ausführungsform, und es wird darauf verwiesen.

Auch die erste Ausführungsform gemäß Figur 5 könnte mit einem Entlüftungsschlitz 50 versehen werden.

### Bezugszeichenliste

- 10: Dachmodul
- 12: Außenhaut
- 14: erster Außenhautabschnitt
- 16: zweiter Außenhautabschnitt
- 18: dritter Außenhautabschnitt
- 20: Folie
- 22: Rand
- 24: Wasserrinne
- 26: Trägerschicht
- 28: Öffnung
- 29: Öffnung
- 30: Rahmen
- 31: Vorsprünge
- 32: Auflagefläche
- 33: Kleberaupe
- 34: Werkzeug-Oberteil
- 36: Werkzeug-Unterteil
- 38: erster Abschnitt
- 40: zweiter Abschnitt
- 42: Werkzeugteil
- 43: Seite
- 44: Werkzeugteil
- 45: Seite
- 46: Werkzeugteil
- 47: Dichtnase
- 48: Aussparung
- 50: Entlüftungsschlitz

## Patentansprüche

1. Karosserieanbauteil für ein Fahrzeug, insbesondere Dachmodul (10), mit einer großflächigen Außenhaut (12), die einen ersten und einen zweiten, aus unterschiedlichen Materialien gebildeten, großflächigen Außenhautabschnitt (14, 16) hat, sowie mit einer rückseitigen, die Außenhaut (12) aufnehmenden Trägerschicht (26), wobei der erste Außenhautabschnitt (14) durch eine Folie (20) und die rückseitige Trägerschicht (26) durch Hinterschäumen der Folie (20) gebildet ist, wobei sich die Trägerschicht (26) einstückig bis unter den zweiten Außenhautabschnitt (16) erstreckt, der nachträglich auf der Trägerschicht (26) befestigt ist, **dadurch gekennzeichnet, daß** an die Trägerschicht (26) ein als Abstandshalter dienender Vorsprung (31) angeformt ist, an dem der zweite oder ein dritter Außenhautabschnitt (16, 18) aufliegt, ohne in diesem Bereich am Vorsprung (31) befestigt zu sein.

2. Karosserieanbauteil nach Anspruch 1, **dadurch gekennzeichnet, daß** die Trägerschicht (26) im Bereich des zweiten Außenhautabschnitts (16) eine großflächige Öffnung (28) besitzt und als Rahmen (30) um die Öffnung (28) herum verläuft.

3. Karosserieanbauteil nach Anspruch 2, **dadurch gekennzeichnet, daß** der Rahmen (30) einstückig und geschlossen um die Öffnung (28) herum verläuft.

4. Karosserieanbauteil nach einem der vorhergehenden Ansprüche, **dadurch gekennzeichnet, daß** der zweite Außenhautabschnitt (16) aus einem transparenten oder transluzenten Material besteht.

5. Karosserieanbauteil nach Anspruch 4, **dadurch gekennzeichnet, daß** der zweite Außenhautabschnitt (16) aus Glas besteht.

6. Karosserieanbauteil nach einem der vorhergehenden Ansprüche, **dadurch gekennzeichnet, daß** der zweite Außenhautabschnitt (16) auf die Trägerschicht (26) aufgeklebt ist.

7. Karosserieanbauteil nach einem der vorhergehenden Ansprüche, **dadurch gekennzeichnet, daß** ein dritter, auf der Trägerschicht (26) sitzender Außenhautabschnitt (18) vorgesehen ist, der durch ein gegenüber dem ersten und zweiten Außenhautabschnitt (14, 16) separates Teil gebildet ist.

8. Karosserieanbauteil nach Anspruch 7, **dadurch gekennzeichnet, daß** der dritte Außenhautabschnitt (18) eine Folie (20) oder ein Teil aus einem transparenten oder transluzenten Material oder ein Solarpaneel ist.

9. Karosserieanbauteil nach einem der vorhergehenden Ansprüche, **dadurch gekennzeichnet, daß** sich die Folie (20) unter den ihr zugewandten Rand (22) des zweiten Außenhautabschnitts (16) erstreckt.

10. Karosserieanbauteil nach Anspruch 9, **dadurch gekennzeichnet, daß** ein Abschnitt der Folie (20), der sich unter den der Folie (20) zugewandten Rand (22) des zweiten Außenhautabschnitts (16) erstreckt, als Wasserrinne (24) ausgebildet ist.

11. Verfahren zum Herstellen eines Karosserieanbauteils mittels der folgenden Schritte:
- Bereitstellen eines Schäumwerkzeugs mit einem Werkzeugunterteil (36), das mehrere Abschnitte (38, 40) aufweist,
- Einlegen einer Folie (20) in das Werkzeugunterteil (36), wobei die Folie (20) an einem ersten Abschnitt (38) des Werkzeugunterteils (36) anliegt,
- Aufbringen eines aushärtbaren Schäummaterials auf die Folie (20) und einen zweiten Abschnitt (40) des Werkzeugunterteils, an dem die Folie (20) nicht anliegt, zur Bildung einer durchgehenden Trägerschicht (26).

12. Verfahren nach Anspruch 11, **dadurch gekennzeichnet, daß** das Werkzeugunterteil (36) aus mehreren Werkzeugteilen (42, 44, 46) besteht.

13. Verfahren nach Anspruch 11 oder 12, **dadurch gekennzeichnet, daß** wenigstens ein Werkzeugteil (42) des Werkzeugunterteils (36) relativ zu einem anderen Werkzeugteil (44) des Werkzeugunterteils (36) beweglich ist.

14. Verfahren nach Anspruch 13, **dadurch gekennzeichnet, daß** ein Entlüftungsschlitz (50) zwischen Folienrand und einem der Werkzeugteile (44) vorgesehen ist, durch den beim Schäumvorgang entstandene Gase entweichen können.

15. Verfahren nach 13 oder 14, **dadurch gekennzeichnet, daß** die Folie (20) von einem ersten Werkzeugteil (42) des Werkzeugunterteils (36) gegen ein zweites Werkzeugteil (44) gedrückt wird, um die Folie (20) weitgehend gegenüber einem der Werkzeugteile (44, 46) abzudichten.

16. Verfahren nach einem der Ansprüche 11 oder 15, **dadurch gekennzeichnet, daß** ein zweiter Außenhautabschnitt (16) auf die Trägerschicht (26) geklebt wird.

## Claims

1. Accessory vehicle body part for a vehicle, in particular roof module (10), with an extensive skin (12) which has a first and a second extensive skin section (14, 16) formed from different materials, and with a rear support layer (26) which holds the skin (12), wherein the first skin section (14) is formed by a film (20) and the rear support layer (26) is formed by applying foam to the back of the film (20), and wherein the support layer (26) extends as a single piece until it is under the second skin section (16) which is subsequently fastened to the support layer (26), **characterized in that** a projection (31) is integrally formed on the support layer (26), the projection serving as a spacer and on which the second or a third skin section (16, 18) rests without being fastened in this region to the projection (31).

2. Accessory vehicle body part according to Claim 1, **characterized in that**, in the region of the second skin section (16), the support layer (26) has an extensive opening (28) and runs in the form of a frame (30) around the opening (28).

3. Accessory vehicle body part according to Claim 2, **characterized in that** the frame (30) runs as a single piece and in a closed manner around the opening (28).

4. Accessory vehicle body part according to one of the preceding claims, **characterized in that** the second skin section (16) is composed of a transparent or translucent material.

5. Accessory vehicle body part according to Claim 4, **characterized in that** the second skin section (16) is composed of glass.

6. Accessory vehicle body part according to one of the preceding claims, **characterized in that** the second skin section (16) is stuck onto the support layer (26).

7. Accessory vehicle body part according to one of the preceding claims, **characterized in that** a third skin section (18) is provided, said skin section sitting on the support layer (26) and being formed by a part which is separate from the first and second skin sections (14, 16).

8. Accessory vehicle body part according to Claim 7, **characterized in that** the third skin section (18) is a film (20) or a part made from a transparent or translucent material or a solar panel.

9. Accessory vehicle body part according to one of the preceding claims, **characterized in that** the film (20) extends under that edge (22) of the second skin section (16) which faces it.

10. Accessory vehicle body part according to Claim 9, **characterized in that** a section of the film (20) that extends under that edge (22) of the second skin section (16) which faces the film (20) is designed as a water channel (24).

11. Manufacturing process for an accessory vehicle body part, using the following steps:
providing a foaming mould with a lower mould part (36) which has a plurality of sections (38, 40),
placing a film (20) into the lower mould part (36), the film (20) bearing against a first section (38) of the lower mould part (36),
applying a curable foaming material to the film (20) and to a second section (40) of the lower mould part, against which section the film (20) does not bear, in order to form a continuous support layer (26).

12. Process according to Claim 11, **characterized in that** the lower mould part (36) comprises a plurality of mould parts (42, 44, 46).

13. Process according to Claim 11 or 12, **characterized in that** at least one mould part (42) of the lower mould part (36) is movable relative to another mould part (44) of the lower mould part (36).

14. Process according to Claim 13, **characterized in that** a venting slot (50) is provided between film edge and one of the mould parts (44), the gases produced during the foaming operation being able to escape through it.

15. Process according to Claim 13 or 14, **characterized in that** the film (20) is pressed by a first mould part (42) of the lower mould part (36) against a second mould part (44) in order to substantially seal the film (20) in relation to one of the mould parts (44, 46).

16. Process according to either of Claims 11 and 15, **characterized in that** a second skin section (16) is stuck to the support layer (26).

## Revendications

1. Module de carrosserie de véhicule, en particulier module de toit (10), qui présente une peau extérieure (12) de grande surface dotée d'une première et d'une deuxième partie (14, 16) de peau extérieure de grande surface formées de matériaux différents, ainsi qu'une couche arrière de support (26) qui reprend la peau extérieure (12), la première partie (14) de peau extérieure étant formée d'une feuille (20) et la couche arrière de support (26) étant formée par moussage de la face arrière de la feuille (20), la couche de support (26) s'étendant d'un seul tenant jusqu'en dessous de la deuxième partie (16) de peau extérieure qui sera ultérieurement fixée sur la couche de support (26), **caractérisé en ce qu'**une saillie (31) sur laquelle la deuxième partie ou une troisième partie (16, 18) de peau extérieure reposent sans être fixées dans cette zone à la saillie (31) et qui sert d'écarteur est formée sur la couche de support (26).

2. Module de carrosserie selon la revendication 1, **caractérisé en ce que** dans la zone de la deuxième partie (16) de peau extérieure, la couche de support (26) présente une ouverture (28) de grande surface et s'étend autour de l'ouverture (28) en formant un encadrement (30).

3. Module de carrosserie selon la revendication 2, **caractérisé en ce que** l'encadrement (30) entoure l'ouverture (28) d'un seul tenant et de manière fermée.

4. Module de carrosserie selon l'une des revendications précédentes, **caractérisé en ce que** la deuxième partie (16) de peau extérieure est constituée d'un matériau transparent ou translucide.

5. Module de carrosserie selon la revendication 4, **caractérisé en ce que** la deuxième partie (16) de peau extérieure est constituée de verre.

6. Module de carrosserie selon l'une des revendications précédentes, **caractérisé en ce que** la deuxième partie (16) de peau extérieure est collée sur la couche de support (26).

7. Module de carrosserie selon l'une des revendications précédentes, **caractérisé en ce qu'**il présente une troisième partie (18) de peau extérieure placée sur la couche de support (26) et formée par une pièce séparée de la première et de la deuxième partie (14, 16) de peau extérieure.

8. Module de carrosserie selon la revendication 7, **caractérisé en ce que** la troisième partie (18) de peau extérieure est une feuille (20), une pièce en un matériau transparent ou translucide ou un panneau solaire.

9. Module de carrosserie selon l'une des revendications précédentes, **caractérisé en ce que** la feuille (20) s'étend en dessous du bord (22) de la deuxième partie (16) de peau extérieure qui lui est associé.

10. Module de carrosserie selon la revendication 9, **caractérisé en ce qu'**une partie de la feuille (20) qui s'étend en dessous du bord (22) de la deuxième partie (16) de peau extérieure tourné vers la feuille (20) est configurée comme rigole (24) de collecte d'eau.

11. Procédé de fabrication d'un module de carrosserie, qui comporte les étapes qui consistent à :
préparer un outil de moussage doté d'une pièce inférieure d'outil (36) qui présente plusieurs parties (38, 40),
placer une feuille (20) dans la pièce inférieure d'outil (36), la feuille (20) reposant sur une première partie (38) de la pièce inférieure d'outil (36),
appliquer un matériau en mousse durcissable sur la feuille (20) et sur une deuxième partie (40) de la pièce inférieure d'outil sur laquelle la feuille (20) ne repose pas, pour former une couche de support (26) continue.

12. Procédé selon la revendication 11, **caractérisé en ce que** la pièce inférieure d'outil (36) est constituée de plusieurs parties d'outil (42, 44, 46).

13. Procédé selon les revendications 11 ou 12, **caractérisé en ce qu'**au moins une pièce d'outil (42) de la partie inférieure d'outil (36) est mobile par rapport à une autre pièce d'outil (44) de la partie inférieure d'outil (36).

14. Procédé selon la revendication 13, **caractérisé en ce qu'**une fente d'évacuation d'air (50) par laquelle les gaz dégagés lors de l'opération de moussage peuvent s'échapper est prévue entre le bord de la feuille et l'une des pièces d'outil (44).

15. Procédé selon les revendications 13 ou 14, **caractérisé en ce que** la feuille (20) est repoussée par une première pièce d'outil (42) de la partie inférieure d'outil (36) contre une deuxième pièce d'outil (44) de manière à assurer une bonne étanchéité entre la feuille (20) et l'une des pièces d'outil (44, 46).

16. Procédé selon l'une des revendications 11 ou 15, **caractérisé en ce qu'**une deuxième partie (16) de peau extérieure est collée sur la couche de support (26).
